# EUROPEAN PATENT SPECIFICATION

(11) **EP 2 566 004 B1**
(45) Date of publication and mention of the grant of the patent: **03.02.2016**
(21) Application number: 12155577.5
(22) Date of filing: 15.02.2012
(51) Int. Cl.: H02J 3/38, H02J 7/35

(54) **Photovoltaic powered system with adaptive power control and method of operating the same**
Photovoltaisch angetriebenes System mit adaptiver Leistungssteuerung und Betriebsverfahren dafür
Système à alimentation photovoltaïque avec contrôle de puissance adaptatif et son procédé de fonctionnement

(30) Priority: 05.09.2011 TW 100131918
(43) Date of publication of application: 06.03.2013
(73) Proprietor: Delta Electronics, Inc., Taoyuan County 32063 (TW)
(72) Inventor: Ku, Chen-Wei, Chungli Industrial Zone, Taoyuan County 32063 (TW); Lee, Lei-Ming, Chungli Industrial Zone, Taoyuan County 32063 (TW); Huang, Ho, Chungli Industrial Zone, Taoyuan County 32063 (TW)
(74) Representative: 2K Patentanwälte Blasberg Kewitz & Reichel

(56) References cited:
- WO-A1-2011/052407
- US-A1- 2009 152 947
- US-A1- 2009 302 681

## Description

### Field of the Invention

The present invention relates generally to a photovoltaic powered system and a method of operating the same, and more particularly to a photovoltaic powered system with an adaptive power control and a method of operating the same.

### BACKGROUND OF THE INVENTION

After the second energy crisis occurred in 1970s, many countries make efforts in seeking and researching alternative sources. Basically, the alternative sources include wind energy, solar energy, geothermal energy, tidal energy, ocean current energy, but without involving coal, petroleum, natural gas, and nuclear energy. Because the solar energy has the pollution-free and public harm-free characteristics and is further inexhaustible in supply and always available for use, the solar energy has high potential applications and developments. Recently with the rapidly development of the high-efficiency solar cells, this topic has been gradually promoted by making policies in many developed countries, such as Europe countries, the United States, Japan, and so on.

The solar photovoltaic system provides a photovoltaic conversion to generate a DC power through the solar cell panels. Afterward, the DC power is converted into an AC power through a power conditioner to supply to a load or the converted AC power is grid-connected to an AC utility power through the utility grid bus. The solar photovoltaic system can be broadly divided into three categories: (1) stand-alone system, (2) grid-connection system, and (3) hybrid system.

The stand-alone system means that the solar photovoltaic system is completely operational without requiring external support and only directly supply to a load. Hence, the stand-alone system is generally built in remote areas or isolated islands. In particular, the required power electricity of a load is either the wind power or the solar power. The solar power or/and the wind power can further provide redundant power to charge the standby battery, whereas the load can be supplied through the battery when the solar power or/and the wind power is insufficient. The grid-connection system means that the solar photovoltaic system is further connected to the power grid of the electric power company. Hence, the grid-connection system is suitable for where the utility power can reach. When the amount of electricity generation of the solar photovoltaic system is greater than that of load demands, the redundant power remains would be delivered to the utility grid bus. On the other hand, the utility power can provide the required power electricity to a load when the amount of electricity generation of the solar photovoltaic system is insufficient. Furthermore, in order to improve the power supply reliability and quality, the hybrid system is developed. The solar photovoltaic system, which is combined with standby batteries, is immediately separated from the utility power to temporarily provide power electricity to a load when the utility power fails. The solar photovoltaic system is further grid-connected to the utility grid bus until the utility power is available.

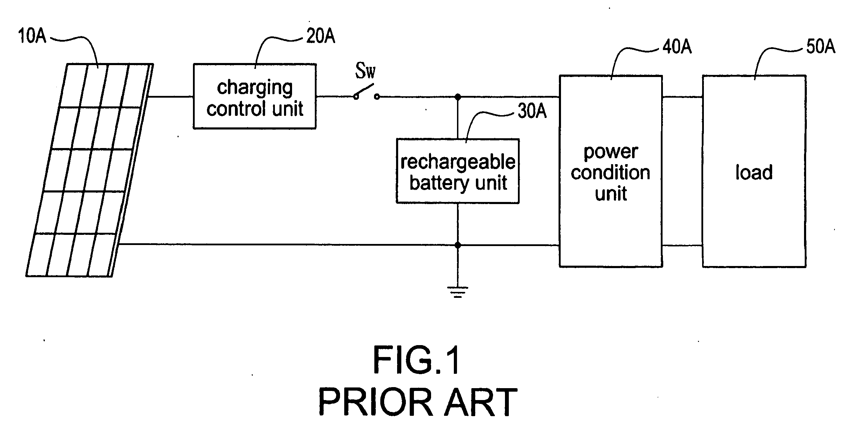

Reference is made to Fig. 1 which is a block diagram of a prior art photovoltaic powered system. The photovoltaic powered system generates a DC voltage (not labeled) and a DC current (not labeled) through a photovoltaic panel 10A. The DC voltage and the DC current are controlled to provide electric power to supply a load 50A. The photovoltaic powered system includes a charging control unit 20A, a switch unit Sw, a rechargeable battery unit 30A, and a power condition unit 40A.

The charging control unit 20A is electrically connected to the photovoltaic panel 10A. The switch unit Sw is electrically connected to the charging control unit 20A. The rechargeable battery unit 30A is electrically connected to the photovoltaic panel 10A and the switch unit Sw. The power condition unit 40A is electrically connected to the switch unit Sw and the rechargeable battery unit 30A. In particular, the charging control unit 20A turns on/off the switch unit Sw according to the electric power generated from the photovoltaic panel 10A.

The charging control unit 20A turns on the switch unit Sw when the photovoltaic panel 10A can provide the electric power when the photovoltaic panel 10A can provide the electric power. Also, the power condition unit 40A regulates the electric power generated from the photovoltaic panel 10A to supply the load 50A and to charge the rechargeable battery unit 30A. On the other hand, the power condition unit 40A regulates the electric power outputted from the rechargeable battery unit 30A to supply the load 50A when the photovoltaic panel 10A cannot provide the electric power.

When the photovoltaic panel 10A can provide the electric power, the power condition unit 40A is provided to regulate the electric power for supplying the load 50A and charging the rechargeable battery unit 30A. That is, the charging control unit 20A is used when both the load 50A is supplied and the rechargeable battery unit 30A is charged by the photovoltaic panel 10A. Accordingly, a power-supplying loop of supplying the electric power to the load 50A and a charging loop of charging the rechargeable battery unit 30A are both through the charging control unit 20A.

Because of conduction losses and switching losses of switches of the charging control unit 20A, the losses reduce conversion efficiency of the charging control unit 20A due to energy consumption during the energy conversion operation. Also, the charging control unit 20A is always used when the electric power generated from the photovoltaic panel 10A is provided to supply the load 50A or to charge the rechargeable battery unit 30A, thus significantly reducing the whole efficiency of the photovoltaic powered system.

Accordingly, it is desirable to provide a photovoltaic powered system with an adaptive power control and a method of operating the same. A photovoltaic panel is provided to generate the electric power to supply the load and to charge the rechargeable battery unit under different daytime/evening or climatic conditions, thus increasing the whole efficiency of the photovoltaic powered system by controlling different switch units turning on and turning off.

US 2009 152947 A relates to a power management system for managing the power from solar panels and rechargeable batteries to power a system that includes DC loads and AC loads. The power management system includes a DC-DC converter in communication with the solar panels, a first switch positioned to control power from the DC-DC converter, to and from the rechargeable batteries, and to the DC loads and AC loads, and when in response to a power requirement from the system being equal to or less than a solar panel power provided by the solar panels, the first switch automatically set, by the power management system, to supply the system with only the solar panel power, and wherein any excess solar panel power not consumed by the system is at the same time automatically directed to recharge the rechargeable battery. However, US 2009 152947 A at least fails to disclose the first and the second switch unit as well as the respective control signals in the claim 1. Claim 1 is delimited against that document.

### SUMMARY OF THE INVENTION

An object of the invention is to provide a photovoltaic powered system with an adaptive power control and a method of operating a photovoltaic powered system to solve the above-mentioned problems.

This problem is solved by a photovoltaic powered system according to claim 1 and by a method of operating a photovoltaic powered system according to claim 8. Further advantageous embodiments are the subject-matter of the dependent claims.

The photovoltaic powered system with an adaptive power control generates a DC voltage and a DC current through a photovoltaic panel. The DC voltage and the DC current are controlled to provide electric power to supply a load. The photovoltaic powered system battery unit. The power condition unit is electrically connected to the photovoltaic panel, the first switch unit, and the second switch unit. The switch control unit is electrically connected to the photovoltaic panel, the first switch unit, and the second switch unit. The switch control unit receives the DC voltage and the DC current generated from the photovoltaic panel to turn on/off the first switch unit and the second switch unit.

The switch control unit turns on the first switch unit and turns off the second switch unit when the photovoltaic panel can provide the electric power. Hence, the electric power generated from the photovoltaic panel can be regulated to supply the load by the power condition unit and the electric power generated from the photovoltaic panel can be controlled to charge the rechargeable battery unit by the charging control unit.

The switch control unit turns off the first switch unit and turns on the second switch unit when the photovoltaic panel cannot provide the electric power. Hence, the electric power stored in the rechargeable battery unit can be regulated to supply the load by the power condition unit.

Another object of the invention is to provide a method of operating a photovoltaic powered system with an adaptive power control to solve the above-mentioned problems.

The method of operating the photovoltaic powered system with an adaptive power control provides a photovoltaic panel to generate a DC voltage and a DC current. The DC voltage and the DC current are controlled to provide the electric power to supply a load. Steps of operating the photovoltaic powered system with an adaptive power control includes: (a) a charging control unit and a rechargeable battery unit are provided; (b) a first switch unit and a second switch unit are provided; (c) a power condition unit is provided; and (d) a switch control unit is provided. Wherein the switch control unit receives the DC voltage and the DC current generated from the photovoltaic panel to turn on/off the first switch unit and the second switch unit.

It is to be understood that both the foregoing general description and the following detailed description are exemplary, and are intended to provide further explanation of the invention as claimed. Other advantages and features of the invention will be apparent from the following description, drawings and claims.

### BRIEF DESCRIPTION OF DRAWING

The features of the invention believed to be novel are set forth with particularity in the appended claims. The invention itself, however, may be best understood by reference to the following detailed description of the invention, which describes an exemplary embodiment of the invention, taken in conjunction with the accompanying drawings, in which:
Fig. 1 is a block diagram of a prior art photovoltaic powered system;
Fig. 2 is a block diagram of a photovoltaic powered system with an adaptive power control according to the present invention;
Fig. 3 is a schematic block diagram of providing an electric power control of the photovoltaic powered system according to the present invention;
Fig. 4 is a schematic block diagram of providing another electric power control of the photovoltaic powered system according to the present invention; and
Fig. 5 is a flowchart of a method of operating a photovoltaic powered system with an adaptive power control.

### DETAILED DESCRIPTION OF THE INVENTION

Reference will now be made to the drawing figures to describe the present invention in detail.

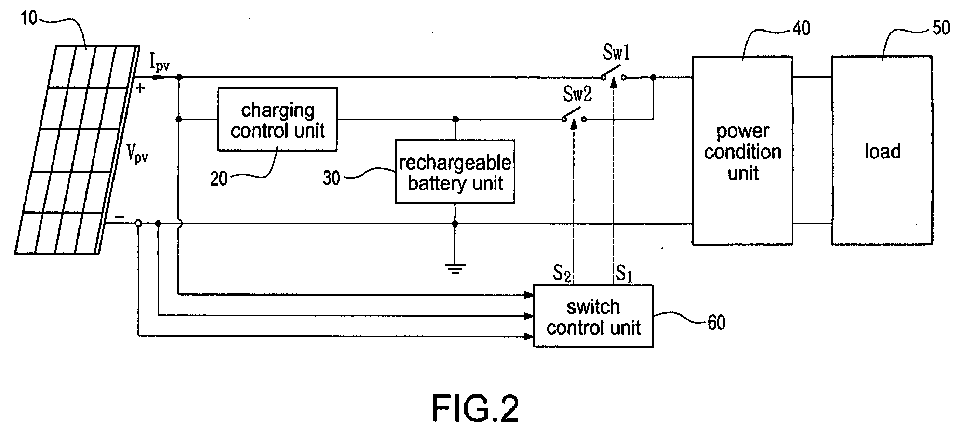

Reference is made to Fig. 2 which is a block diagram of a photovoltaic powered system with an adaptive power control according to the present invention. The photovoltaic powered system with an adaptive power control generates a DC voltage Vpv and a DC current Ipv through a photovoltaic panel 10. The DC voltage Vpv and the DC current Ipv are controlled to provide the electric power to supply a load 50. The photovoltaic powered system includes a charging control unit 20, a rechargeable battery unit 30, a first switch unit Sw1, a second switch unit Sw2, a power condition unit 40, and a switch control unit 60.

The charging control unit 20 is electrically connected to the photovoltaic panel 10. The rechargeable battery unit 30 is electrically connected to the photovoltaic panel 10 and the charging control unit 20. Note that, the charging control unit 20 controls required charging voltage and charging current of the rechargeable battery unit 30 and controls operating points of the DC voltage Vpv and the DC current Ipv generated from the photovoltaic panel 10 to provide a maximum power point tracking (MPPT) control. The first switch unit Sw1 is electrically connected to the photovoltaic panel 10. The second switch unit Sw2 is electrically connected to the charging control unit 20 and the rechargeable battery unit 30. The power condition unit 40 is electrically connected to the photovoltaic panel 10, the first switch unit Sw1, and the second switch unit Sw2. In particular, the power condition unit 40 can be a DC-to-AC inverter. In addition, the power condition unit 40 can also control operating points of the DC voltage Vpv and the DC current Ipv generated from the photovoltaic panel 10 to provide a maximum power point tracking (MPPT) control. Note that, the used topologies of the power condition unit 40 are depended on application demands, but not limited. The switch control unit 60 is electrically connected to the photovoltaic panel 10, the first switch unit Sw1, and the second switch unit Sw2. The switch control unit 60 receives the DC voltage Vpv and the DC current Ipv generated from the photovoltaic panel 10 to turn on/off the first switch unit Sw1 and the second switch unit Sw2.

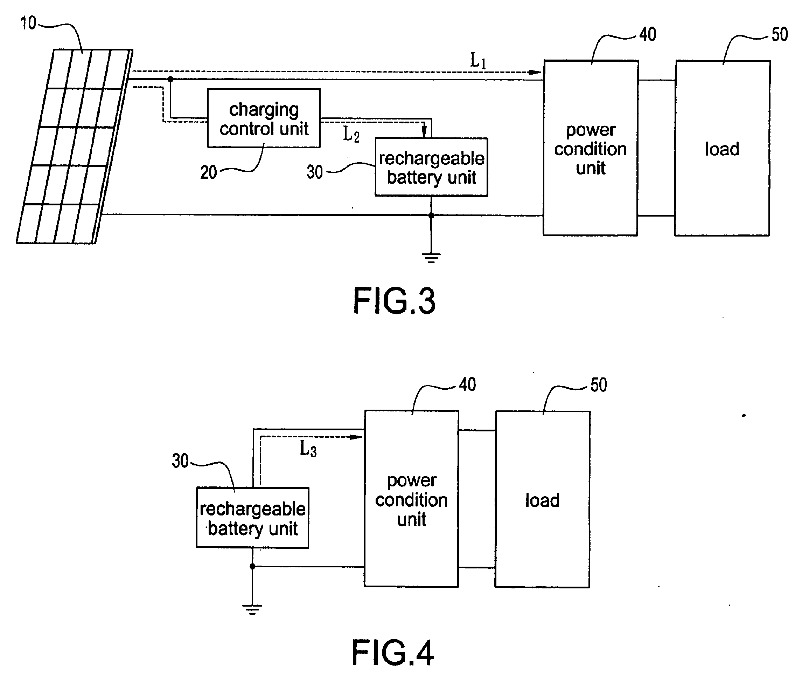

The detailed operation of the photovoltaic powered system with the adaptive power control will be described as follows. Reference is made to Fig. 3 which is a schematic block diagram of providing an electric power control of the photovoltaic powered system according to the present invention. The switch control unit 60 turns on the first switch unit Sw1 and turns off the second switch unit Sw2 when the photovoltaic panel 10 can provide the electric power. Hence, the electric power generated from the photovoltaic panel 10 can be regulated to supply the load 50 by the power condition unit 40. At this time, a first power-supplying loop L1 of providing the electric power to supply the load 50 from the photovoltaic panel 10 is shown in Fig. 3.

Simultaneously, the electric power generated from the photovoltaic panel 10 can be controlled to charge the rechargeable battery unit 30 by the charging control unit 20 so that the electric power can be stored in the rechargeable battery unit 30. At this time, a second power-supplying loop L2 of providing the electric power to charge the rechargeable battery unit 30 from the photovoltaic panel 10 is shown in Fig. 3.

Especially to deserve to be mentioned, the switch control unit 60 is electrically connected to the photovoltaic panel 10 to receive the DC voltage Vpv and the DC current Ipv generated from the photovoltaic panel 10. Also, the switch control unit 60 judges whether the photovoltaic panel 10 can provide the electric power or not according to magnitude of the DC voltage Vpv and the DC current Ipv. That is, the photovoltaic panel 10 provides an amount of the electric power that is equal to a product of the DC voltage Vpv and the DC current Ipv when neither the DC voltage Vpv nor the DC current Ipv is zero. In practical applications, the photovoltaic panel 10 usually can output the electric power when the photovoltaic powered system is operated in a daytime or in a sunny day, namely, in a fine day. That is, when the photovoltaic powered system is operated in a daytime or in a sunny day, the outputted electric power from the photovoltaic panel 10 can be regulated to supply the load 50 by the power condition unit 40. Simultaneously, the electric power generated from the photovoltaic panel 10 can be controlled to charge the rechargeable battery unit 30 by the charging control unit 20 so that the electric power can be stored in the rechargeable battery unit 30. Accordingly, the electric power generated from the photovoltaic panel 10 can be directly supplied to the load 50 and also the redundant electric power can be stored in the rechargeable battery unit 30.

When the photovoltaic panel 10 can provide the electric power, the power condition unit 40 can regulate the electric power to supply the load 50 and charge the rechargeable battery unit 30. That is, the power condition unit 40 can regulate the electric power generated from the photovoltaic panel 10 according to the required power of the load 50. In addition, the remaining electric power generated from the photovoltaic panel 10 is stored in the rechargeable battery unit 30.

In the above-mentioned operation, the switch control unit 60 produces a first control signal S1 to turn on the first switch unit Sw1 and produces a second control signal S2 to turn off the second switch unit Sw2. Note that, the first control signal S1 and the second control signal S2 are complementary-level signals, that is, the second control signal S2 is a low-level signal to turn off the second switch unit Sw2 when the first control signal S1 is a high-level signal to turn on the first switch unit Sw1.

Reference is made to Fig. 4 which is a schematic block diagram of providing another electric power control of the photovoltaic powered system according to the present invention. The switch control unit 60 turns off the first switch unit Sw1 and turns on the second switch unit Sw2 when the photovoltaic panel 10 cannot provide the electric power. Hence, the electric power stored in the rechargeable battery unit 30 can be regulated to supply the load 50 by the power condition unit 40. At this time, a third power-supplying loop L3 of providing the electric power to supply the load 50 from the rechargeable battery unit 30 is shown in Fig. 4.

Especially to deserve to be mentioned, the switch control unit 60 is electrically connected to the photovoltaic panel 10 to receive the DC voltage Vpv and the DC current Ipv generated from the photovoltaic panel 10. Also, the switch control unit 60 judges whether the photovoltaic panel 10 can provide the electric power or not according to magnitude of the DC voltage Vpv and the DC current Ipv. That is, the photovoltaic panel 10 provides an amount of the electric power that is equal to zero when both the DC voltage Vpv and the DC current Ipv are zero. In practical applications, the photovoltaic panel 10 usually cannot output the electric power when the photovoltaic powered system is operated in an evening. That is, when the photovoltaic powered system is operated in an evening, the outputted electric power from the rechargeable battery unit 30 can be regulated to supply the load 50 by the power condition unit 40. That is, the rechargeable battery unit 30 can operated to supply the stored electric power to the load 50 when the photovoltaic panel 10 cannot provide the electric power to the load 50. In addition, the power condition unit 40 regulates the stored electric power in the rechargeable battery unit 30 to supply the load 50 when the photovoltaic panel 10 cannot provide the electric power. That is, the power condition unit 40 can regulate the electric power outputted from the rechargeable battery unit 30 according to the required power of the load 50.

In the above-mentioned operation, the switch control unit 60 produces the first control signal S1 to turn off the first switch unit Sw1 and produces the second control signal S2 to turn on the second switch unit Sw2. Note that, the first control signal S1 and the second control signal S2 are complementary-level signals, that is, the second control signal S2 is a high-level signal to turn on the second switch unit Sw2 when the first control signal S1 is a low-level signal to turn off the first switch unit Sw1.

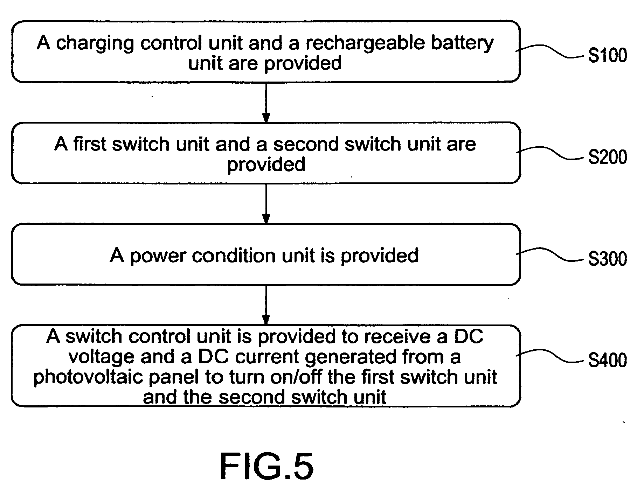

Reference is made to Fig. 5 which is a flowchart of a method of operating a photovoltaic powered system with an adaptive power control. The photovoltaic powered system with the adaptive power control provides a photovoltaic panel to generate a DC voltage and a DC current. The DC voltage and the DC current are controlled to provide an electric power to supply a load. The method of operating the photovoltaic powered system with the adaptive power control includes following steps: A charging control unit and a rechargeable battery unit are provided (S100). A first switch unit and a second switch unit are provided (S200). A power condition unit is provided (S300). In particular, the power condition unit is a DC-to-AC inverter. In addition, the power condition unit can control operating points of the DC voltage and the DC current generated from the photovoltaic panel to provide a maximum power point tracking (MPPT) control. A switch control unit is provided (S400). Wherein the switch control unit receives the DC voltage and the DC current generated from the photovoltaic panel to turn on/off the first switch unit and the second switch unit. Note that, the switch control unit produces a first control signal and a second control signal to turn on/off the first switch unit and the second switch unit, respectively. In particular, the first control signal and the second control signal are complementary-level signals. That is, the second control signal is a low-level signal to turn off the second switch unit when the first control signal is a high-level signal to turn on the first switch unit. On the other hand, the second control signal is a high-level signal to turn on the second switch unit when the first control signal is a low-level signal to turn off the first switch unit.

In the step (S400), the switch control unit turns on the first switch unit and turns off the second switch unit when the photovoltaic panel can provide the electric power so that the electric power generated from the photovoltaic panel is regulated to supply the load by the power condition unit. Simultaneously, the electric power generated from the photovoltaic panel is controlled to charge the rechargeable battery unit by the charging control unit so that the electric power can be stored in the rechargeable battery unit. That is, the power condition unit is provided to regulate the electric power for supplying the load and charging the rechargeable battery unit when the photovoltaic panel can provide the electric power. At the same time, the charging control unit charges the rechargeable battery unit by controlling required charging voltage and charging current of the rechargeable battery unit. In addition, the charging control unit can also control operating points of the DC voltage and the DC current generated from the photovoltaic panel to provide a maximum power point tracking (MPPT) control.

Similarly, the switch control unit turns off the first switch unit and turns on the second switch unit when the photovoltaic panel cannot provide the electric power so that the electric power stored in the rechargeable battery unit is regulated to supply the load by the power condition unit in the step (S400). That is, the power condition unit is provided to regulate the electric power stored in the rechargeable battery unit for supplying the load when the photovoltaic panel cannot provide the electric power.

In conclusion, the present invention has following advantages:
1. The first switch unit and the second switch are controlled by the switch control unit according to daytime/evening or climatic conditions, thus achieving an adaptive power control of the photovoltaic powered system;
2. When the photovoltaic panel can provide the electric power, different power-supplying loops are provided to supply the load or to charge the rechargeable battery unit so that the photovoltaic panel can directly supply the load without operating the charging control unit, thus significantly increasing the whole efficiency of the photovoltaic powered system.

## Claims

1. A photovoltaic powered system with an adaptive power control generating a DC voltage (Vpv) and a DC current (Ipv) through a photovoltaic panel (10), the DC voltage (Vpv) and the DC current (Ipv) controlled to provide an electric power to supply a load (50); the photovoltaic powered system comprising:
a charging control unit (20) electrically connected to the photovoltaic panel (10);
a rechargeable battery unit (30) electrically connected to the photovoltaic panel (10) and the charging control unit (20);
a first switch unit (Sw1) electrically connected to the photovoltaic panel (10);
a second switch unit (Sw2) electrically connected to the charging control unit (20) and the rechargeable battery unit (30);
a power condition unit (40) electrically connected to the photovoltaic panel (10), the first switch unit (Sw1), and the second switch unit (Sw2); and
a switch control unit (60) electrically connected to the photovoltaic panel (10), the first switch unit (Sw1), and the second switch unit (Sw2); the switch control unit (60) receiving the DC voltage (Vpv) and the DC current (Ipv) generated from the photovoltaic panel (10);
wherein the electric power generated from the photovoltaic panel (10) is regulated to supply the load (50) by the power condition unit (40) and the electric power generated from the photovoltaic panel (10) is controlled to charge the rechargeable battery unit (30) by the charging control unit (20), the switch control unit (60) turns on the first switch unit (Sw1) and turns off the second switch unit (Sw2) when the photovoltaic panel (10) can provide the electric power;
wherein the electric power stored in the rechargeable battery unit (30) is regulated to supply the load (50) by the power condition unit (40), the switch control unit (60) turns off the first switch unit (Sw1) and turns on the second switch unit (Sw2) when the photovoltaic panel (10) cannot provide the electric power,
**characterized in that** the switch control unit (60) is configured to produce a first control signal (S1) and a second control signal (S2) to turn on/off the first switch unit (Sw1) and the second switch unit (Sw2), respectively, wherein the first control signal (S1) and the second control signal (S2) are complementary-level signals.

2. The photovoltaic powered system of claim 1, wherein the first switch unit (Sw1) is turned on and the second switch unit (Sw2) is turned off and wherein the power condition unit (40) controls an amount of the electric power generated from the photovoltaic panel (10) and regulates an amount of the electric power provided to the load (50) by controlling operating points of the DC voltage (Vpv) and the DC current (Ipv) when the photovoltaic panel (10) can provide the electric power.

3. The photovoltaic powered system of claim 2, wherein the power condition unit (40) provides a maximum power point tracking (MPPT) control to control the DC voltage (Vpv) and the DC current (Ipv) operated under the maximum power point, thus generating the maximum electric power from the photovoltaic panel (10).

4. The photovoltaic powered system of any of the preceding claims, wherein the first switch unit (Sw1) is turned on and the second switch unit (Sw2) is turned off and wherein the charging control unit (20) charges the rechargeable battery unit (30) by controlling required charging voltage and charging current of the rechargeable battery unit (30) when the photovoltaic panel (10) can provide the electric power.

5. The photovoltaic powered system of any of the preceding claims, wherein the first switch unit (Sw1) is turned off and the second switch unit (Sw2) is turned on and wherein the power condition unit (40) regulates the electric power stored in the rechargeable battery unit (30) to supply the load (50) when the photovoltaic panel (10) cannot provide the electric power.

6. The photovoltaic powered system of any of the preceding claims, wherein the power condition unit (40) is a DC-to-AC inverter.

7. A method of operating a photovoltaic powered system with an adaptive power control as claimed in any of the preceding claims and a photovoltaic panel (10) generating a DC voltage (Vpv) and a DC current (Ipv), the DC voltage (Vpv) and the DC current (Ipv) controlled to provide an electric power to supply a load (50), comprising the steps of:
(a) providing a charging control unit (20) and a rechargeable battery unit (30);
(b) providing a first switch unit (Sw1) and a second switch unit (Sw2);
(c) providing a power condition unit (40); and
(d) providing a switch control unit (60);
wherein the switch control unit (60) receives the DC voltage (Vpv) and the DC current (Ipv) generated from the photovoltaic panel (10) to produce a first control signal (S1) and a second control signal (S2) to turn on/off the first switch unit (Sw1) and the second switch unit (Sw2), respectively; wherein the first control signal (S1) and the second control signal (S2) are complementary-level signals.

8. The method of claim 7, wherein in the step (d) the electric power generated from the photovoltaic panel (10) is regulated to supply the load (50) by the power condition unit (40) and the electric power generated from the photovoltaic panel (10) is controlled to charge the rechargeable battery unit (30) by the charging control unit (20) and the switch control unit (60) turns on the first switch unit (Sw1) and turns off the second switch unit (Sw2) when the photovoltaic panel (10) can provide the electric power.

9. The method of claim 8, wherein the first switch unit (Sw1) is turned on and the second switch unit (Sw2) is turned off and wherein the power condition unit (40) controls an amount of the electric power generated from the photovoltaic panel (10) and regulates an amount of the electric power provided to the load (50) by controlling operating points of the DC voltage (Vpv) and the DC current (Ipv) when the photovoltaic panel (10) can provide the electric power.

10. The method of claim 9, wherein the power condition unit (40) provides a maximum power point tracking (MPPT) control to control the DC voltage (Vpv) and the DC current (Ipv) operated under the maximum power point, thus generating the maximum electric power from the photovoltaic panel (10).

11. The method of any of claims 7 to 10, wherein the first switch unit (Sw1) is turned on and the second switch unit (Sw2) is turned off and the charging control unit (20) charges the rechargeable battery unit (30) by controlling required charging voltage and charging current of the rechargeable battery unit (30) when the photovoltaic panel (10) can provide the electric power.

12. The method of any of claims 7 to 11, wherein in the step (d) the electric power outputted from the rechargeable battery unit (30) is regulated to supply the load (50) by the power condition unit (40) and the switch control unit (60) turns off the first switch unit (Sw1) and turns on the second switch unit (Sw2) when the photovoltaic panel (10) cannot provide the electric power.

13. The method of any of claims 7 to 12, wherein the power condition unit (40) is a DC-to-AC inverter.

## Patentansprüche

1. Photovoltaisch stromversorgtes System mit einer adaptiven Leistungssteuerung, das mittels eines Photovoltaik-Panels (10) eine Gleichspannung (Vpv) und einen Gleichstrom (Ipv) erzeugt, wobei die Gleichspannung (Vpv) und der Gleichstrom (Ipv) gesteuert werden, um zur Stromversorgung einer Last (50) eine elektrische Spannung bereitzustellen;
wobei das photovoltaisch stromversorgte System umfasst:
eine Ladesteuereinheit (20), die elektrisch mit dem Photovoltaik-Panel (10) verbunden ist;
eine wiederaufladbare Batterieeinheit (30), die elektrisch mit dem Photovoltaik-Panel (10) und der Ladesteuereinheit (20) verbunden ist;
eine erste Schalteinheit (SW1), die elektrisch mit dem Photovoltaik-Panel (10) verbunden ist;
eine zweite Schalteinheit (SW2), die elektrisch mit der Ladesteuereinheit (20) und der wiederaufladbaren Batterieeinheit (30) verbunden ist;
eine Stromzustandseinheit (40), die elektrisch mit dem Photovoltaik-Panel (10), der ersten Schalteinheit (SW1) und der zweiten Schalteinheit (SW2) verbunden ist; und
eine Schaltersteuereinheit (60), die elektrisch mit dem Photovoltaik-Panel (10), der ersten Schalteinheit (SW1) und der zweiten Schalteinheit (SW2) verbunden ist; wobei die Schaltersteuereinheit (60) die Gleichspannung (Vpv) und den Gleichstrom (Ipv) erhält, die von dem Photovoltaik-Panel (10) erzeugt werden,
wobei der elektrische Strom, der von dem Photovoltaik-Panel (10) erzeugt wird, über die Stromzustandseinheit (40) zur Versorgung der Last (50) gesteuert wird, und wobei der elektrische Strom, der von dem Photovoltaik-Panel (10) erzeugt wird, gesteuert wird, um die wiederaufladbare Batterieeinheit (30) über die Ladesteuereinheit (20) aufzuladen, wobei die Schaltersteuereinheit (60) die erste Schalteinheit (SW1) anschaltet und die zweite Schalteinheit (SW2) ausschaltet, wenn das Photovoltaik-Panel (10) den elektrischen Strom bereitstellen kann;
wobei die elektrische Energie, die in der wiederaufladbaren Batterieeinheit (30) gespeichert wird, gesteuert wird, um die Last (50) über die Stromzustandseinheit (40) zu versorgen, wobei die Schaltersteuereinheit (60) die erste Schalteinheit (SW1) ausschaltet und die zweite Schalteinheit (SW2) anschaltet, wenn das Photovoltaik-Panel (10) keinen elektrischen Strom bereitstellen kann,
**dadurch gekennzeichnet, dass** die Schaltersteuereinheit (60) ausgelegt ist, um ein erstes Steuersignal (S1) und ein zweites Steuersignal (S2) zum Ein-/Ausschalten der ersten Schalteinheit (SW1) und der zweiten Schalteinheit (SW2) zu erzeugen, wobei das erste Steuersignal (S1) und das zweite Steuersignal (S2) Signale mit komplementären Pegeln sind.

2. Photovoltaisch stromversorgtes System nach Anspruch 1, wobei, wenn das Photovoltaik-Panel (10) den elektrischen Strom bereitstellen kann, die erste Schalteinheit (SW1) eingeschaltet wird und die zweite Schalteinheit (SW2) ausgeschaltet wird und wobei die Stromzustandseinheit (40) die Menge an elektrischer Energie, die von dem Photovoltaik-Panel (10) erzeugt wird und die Menge der der Last (50) bereitgestellten elektrischen Energie durch Steuerung von Arbeitspunkten der Gleichspannung (Vpv) und des Gleichstroms (Ipv) steuert.

3. Photovoltaisch stromversorgtes System nach Anspruch 2, wobei die Stromzustandseinheit (40) eine Maximal-Leistungspunkt-Suche bzw. Maximum Power Point-Tracking (MPPT) bereitstellt, um die Gleichspannung (Vpv) und den Gleichstrom (Ipv), die unter dem Maximal-Leistungspunkt betrieben werden, zu steuern, sodass das Photovoltaik-Panel (10) die maximale elektrische Leistung erzeugt.

4. Photovoltaisch stromversorgtes System nach einem der vorhergehenden Ansprüche, wobei, wenn das Photovoltaik-Panel (10) den elektrischen Strom bereitstellen kann, die erste Schalteinheit (SW1) eingeschaltet wird und die zweite Schalteinheit (SW2) ausgeschaltet wird und die Ladesteuereinheit (20) die wiederaufladbare Batterieeinheit (30) durch Steuerung der erforderlichen Ladespannung und des erforderlichen Ladestroms der wiederaufladbaren Batterieeinheit (30) auflädt.

5. Photovoltaisch stromversorgtes System nach einem der vorhergehenden Ansprüche, wobei, wenn das Photovoltaik-Panel (10) den elektrischen Strom nicht bereitstellen kann, die erste Schalteinheit (SW1) ausgeschaltet wird und die zweite Schalteinheit (SW2) angeschaltet wird und die Stromzustandseinheit (40) die in der wiederaufladbaren Batterieeinheit (30) gespeicherte elektrische Energie steuert, um die Last (50) zu versorgen.

6. Photovoltaisch stromversorgtes System nach einem der vorhergehenden Ansprüche, wobei die Stromzustandseinheit (40) ein Gleichstrom-zu-Wechselstrom-Inverter ist.

7. Verfahren zum Betreiben eines photovoltaisch stromversorgten Systems mit einer adaptiven Leistungssteuerung nach einem der vorhergehenden Ansprüche und mit einem Photovoltaik-Panel (10), das eine Gleichspannung (Vpv) und einen Gleichstrom (Ipv) erzeugt, wobei die Gleichspannung (Vpv) und der Gleichstrom (Ipv) gesteuert werden, um eine Last (50) mit einer elektrischen Spannung zu versorgen, mit den Schritten:
(a) Bereitstellen einer Ladesteuereinheit (20) und einer wiederaufladbaren Batterieeinheit (30);
(b) Bereitstellen einer ersten Schalteinheit (SW1) und einer zweiten Schalteinheit (SW2);
(c) Bereitstellen einer Stromzustandseinheit (40); und
(d) Bereitstellen einer Schaltersteuereinheit (60);
wobei die Schaltersteuereinheit (60) die Gleichspannung (Vpv) und den Gleichstrom (Ipv) von dem Photovoltaik-Panel (10) empfängt, um ein erstes Steuersignal (S1) und ein zweites Steuersignal (S2) zum Ein-/Ausschalten der ersten Schalteinheit (SW1) und der zweiten Schalteinheit (SW2) zu erzeugen, wobei das erste Steuersignal (S1) und das zweite Steuersignal (S2) Signale mit komplementären Pegeln sind.

8. Verfahren nach Anspruch 7, wobei in dem Schritt (d) der elektrische Strom, der von dem Photovoltaik-Panel (10) erzeugt wird, gesteuert wird, um die Last (50) über die Stromzustandseinheit (40) zu versorgen, und wobei der elektrische Strom, der von dem Photovoltaik-Panel (10) erzeugt wird, gesteuert wird, um die wiederaufladbare Batterieeinheit (30) über die Ladesteuereinheit (20) aufzuladen, und die Schaltersteuereinheit (60) die erste Schalteinheit (SW1) anschaltet und die zweite Schalteinheit (SW2) ausschaltet, wenn das Photovoltaik-Panel (10) den elektrischen Strom bereitstellen kann.

9. Verfahren nach Anspruch 8, wobei, wenn das Photovoltaik-Panel (10) den elektrischen Strom bereitstellen kann, die erste Schalteinheit (SW1) eingeschaltet wird und die zweite Schalteinheit (SW2) ausgeschaltet wird und die Stromzustandseinheit (40) die Menge an elektrischer Energie, die von dem Photovoltaik-Panel (10) erzeugt wird und die Menge der der Last (50) bereitgestellten elektrischen Energie durch Steuerung von Arbeitspunkten der Gleichspannung (Vpv) und des Gleichstroms (Ipv) steuert.

10. Verfahren nach Anspruch 9, wobei die Stromzustandseinheit (40) eine Maximal-Leistungspurikt-Suche bzw. Maximum Power Point-Tracking (MPPT) bereitstellt, um die Gleichspannung (Vpv) und den Gleichstrom (Ipv), die unter dem Maximal-Leistungspunkt betrieben werden, zu steuern, sodass das Photovoltaik-Panel (10) die maximale elektrische Leistung erzeugt.

11. Verfahren nach einem der Ansprüche 7 bis 10, wobei, wenn das Photovoltaik-Panel (10) den elektrischen Strom bereitstellen kann, die erste Schalteinheit (SW1) eingeschaltet wird und die zweite Schalteinheit (SW2) ausgeschaltet wird und die Ladesteuereinheit (20) die wiederaufladbare Batterieeinheit (30) durch Steuerung der erforderlichen Ladespannung und des erforderlichen Ladestroms der wiederaufladbaren Batterieeinheit (30) auflädt.

12. Verfahren nach einem der Ansprüche 7 bis 11, wobei in dem Schritt (d) die von der wiederaufladbaren Batterie-Einheit (30) abgegebene elektrische Energie zur Versorgung der Last (50) über die Stromzustandseinheit (40) gesteuert wird und die Schaltersteuereinheit (60) die erste Schalteinheit (SW1) ausschaltet und die zweite Schalteinheit (SW2) anschaltet, wenn das Photovoltaik-Panel (10) keinen elektrischen Strom bereitstellen kann.

13. Verfahren nach einem der Ansprüche 7 bis 12, wobei die Stromzustandseinheit (40) ein Gleichstrom-zu-Wechselstrom-Inverter ist.

## Revendications

1. Un système à alimentation photovoltaïque à commande de puissance adaptative pour générer une tension DC (Vpv) et un courant DC (Ipv) via un panneau photovoltaïque (10), la tension DC (Vpv) et le courant DC (Ipv) étant commandés pour fournir une énergie électrique pour l'alimentation d'une charge (50) ; le système à alimentation photovoltaïque comprenant :
une unité de commande de charge (20) connectée électriquement au panneau photovoltaïque (10) ;
une unité de batterie rechargeable (30) connectée électriquement au panneau photovoltaïque (10) et à l'unité de commande de charge (20) ;
une première unité de commutation (Sw1) connectée électriquement au panneau photovoltaïque (10) ;
une seconde unité de commutation (Sw2) connectée électriquement à l'unité de commande de charge (20) et à l'unité de batterie rechargeable (30);
une unité de conditionnement électrique (40) connectée électriquement au panneau photovoltaïque (10), à la première unité de commutation (Sw1), et à la seconde unité de commutation (Sw2) ; et
une unité de commande de commutation (60) connectée électriquement au panneau photovoltaïque (10), à la première unité de commutation (Sw1), et à la seconde unité de commutation (Sw2), l'unité de commande de commutation (60) recevant la tension DC (Vpv) et le courant DC (Ipv) générés par le panneau photovoltaïque (10),
dans lequel l'énergie électrique générée par le panneau photovoltaïque (10) est régulé pour l'alimentation de la charge (50) au moyen de l'unité de conditionnement électrique (40) et l'énergie électrique générée par le panneau photovoltaïque (10) est commandé pour la charge de l'unité de batterie rechargeable (30) au moyen de l'unité de commande de charge (20), l'unité de commande de commutation (60) mettant en fonctionnement la première unité de commutation (Sw1) et éteignant la seconde unité de commutation (Sw2) lorsque le panneau photovoltaïque (10) peut fournir de l'énergie électrique ;
dans lequel l'énergie électrique stockée au sein de l'unité de batterie rechargeable (30) est régulée pour l'alimentation de la charge (50) par l'unité de conditionnement électrique (40), l'unité de commande de commutation (60) éteignant la première unité de commutation (Sw1) et mettant en fonctionnement la seconde unité de commutation (Sw2) lorsque le panneau photovoltaïque (10) ne peut générer de courant électrique,
**caractérisé en ce que** l'unité de commande de commutation (60) est configuré pour produire un premier signal de commande (S1) et un second signal de commande (S2) pour mettre en fonctionnement/éteindre la première unité de commutation (Sw1) et la seconde unité de commutation (Sw2), respectivement, lorsque le premier signal de commande (S1) et le second signal de commande (S2) sont des signaux de niveaux complémentaires.

2. Le système à alimentation photovoltaïque selon la revendication 1, dans lequel la première unité de commutation (Sw1) est mise en fonctionnement et la seconde unité de commutation (Sw2) est éteinte et, dans lequel l'unité de conditionnement électrique (40) commande une partie de l'énergie électrique générée par le panneau photovoltaïque (10) et régule une partie de l'énergie électrique fournie à la charge (50) par la commande de points de fonctionnement de la tension DC (Vpv) et du courant DC (Ipv) lorsque le panneau photovoltaïque (10) peut générer de l'énergie électrique.

3. Le système à alimentation photovoltaïque selon la revendication 2, dans lequel l'unité de conditionnement électrique (40) fournit une commande de suivi de point de puissance maximum (MPPT) pour commander la tension DC (Vpv) et le courant DC (Ipv) opérés sous le point de puissance maximum, produisant ainsi le maximum d'énergie électrique du panneau photovoltaïque (10).

4. Le système à alimentation photovoltaïque selon l'une quelconque des revendications précédentes, dans lequel la première unité de commutation (Sw1) est mise en fonctionnement et la seconde unité de commutation (Sw2) est éteinte, et dans lequel l'unité de commande de charge (20) charge l'unité de batterie rechargeable (30) en commandant la tension de charge requise et le courant de charge requis de l'unité de batterie rechargeable (30) lorsque le panneau photovoltaïque (10) peut fournir de l'énergie électrique.

5. Le système à alimentation photovoltaïque selon l'une quelconque des revendications précédentes, dans lequel la première unité de commutation (Sw1) est éteinte et la seconde unité de commutation (Sw2) est mise en fonctionnement, et dans lequel l'unité de conditionnement électrique (40) régule l'énergie électrique stockée dans l'unité de batterie rechargeable (30) pour alimenter la charge (50) lorsque le panneau photovoltaïque (10) ne peut produire d'énergie électrique.

6. Le système à alimentation photovoltaïque selon l'une quelconque des revendications précédentes, dans lequel l'unité de conditionnement électrique (40) est un convertisseur DC-AC.

7. Une méthode de fonctionnement d'un système à alimentation photovoltaïque jà commande de puissance adaptative, telle que revendiquée dans k'une quelconque des revendications précédentes et un panneau photovoltaïque (10) générant une tension DC (Vpv) et un courant DC (Ipv), la tension DC (Vpv) et le courant DC (Ipv) étant commandés pour fournir de l'énergie électrique à une charge (50), comprenant les étapes :
(a) fournir une unité de commande de charge (20) et une unité de batterie rechargeable (30) ;
(b) fournir une première unité de commutation (Sw1) et une seconde unité de commutation (Sw2) ;
(c) fournir une unité de conditionnement électrique (40) ; et
(d) fournir une unité de commande de commutation (60) ;
dans laquelle l'unité de commande de commutation (60) reçoit la tension DC (Vpv) et le courant DC (Ipv) générés par le panneau photovoltaïque (10) pour produire un premier signal de commande (S1) et un second signal de commande (S2) pour mettre en fonctionnement/éteindre la première unité de commutation (Sw1) et la seconde unité de commutation (Sw2), respectivement ; dans laquelle le premier signal de commande (S1) et le second signal de commande (S2) sont des signaux de niveaux complémentaires.

8. La méthode de la revendication 7, dans laquelle, dans l'étape (d), l'énergie électrique produite par le panneau photovoltaïque (10) est régulé pour alimenter la charge (50) par l'unité de conditionnement électrique (40) et l'énergie électrique générée par le panneau photovoltaïque (10) est commandée pour charger l'unité de batterie rechargeable (30) par l'unité de commande de charge (20) et l'unité de commande de commutation (60) met en fonctionnement la première unité de commutation (Sw1) et éteint la seconde unité de commutation (Sw2) lorsque le panneau photovoltaïque (10) peut produire du courant électrique.

9. La méthode de la revendication 8, dans laquelle la première unité de commutation (Sw1) est mise en fonctionnement et la seconde unité de commutation (Sw2) est éteinte , et dans laquelle l'unité de conditionnement électrique (40) commande une partie de l'énergie électrique produite par le panneau photovoltaïque (10) et régule une partie de l'énergie électrique fournie à la charge (50) par la commande de points de fonctionnement de la tension DC (Vpv) et du courant DC (Ipv) lorsque le panneau photovoltaïque (10) peut produire du courant électrique.

10. La méthode de la revendication 9, dans laquelle l'unité de conditionnement électrique (40) fournit une commande de suivi de point de puissance maximum (PMMT) pour la commande de la tension DC (Vpv) et du courant DC (Ipv) mis en oeuvre sous le point de puissance maximum, de manière à produire une énergie électrique maximum du panneau photovoltaïque (10).

11. La méthode de l'une quelconque des revendications 7 à 10, dans laquelle la première unité de commutation (Sw1) est mise en fonctionnement et la seconde unité de commutation (Sw2) est éteinte et l'unité de commande de charge (20) charge l'unité de batterie rechargeable (30) en commandant la tension de charge requise et le courant de charge de l'unité de batterie rechargeable (30) lorsque le panne photovoltaïque (10) peut produire de l'énergie électrique.

12. La méthode de l'une quelconque des revendications 7 à 11, dans laquelle, dans l'étape (d), l'énergie électrique en sortie de l'unité de batterie rechargeable (30) est régulée pour l'alimentation de la charge (50) par l'unité de conditionnement électrique (40) et l'unité de commande de commutation (60) éteint la première unité de commutation (Sw1) et met en fonctionnement la seconde unité de commutation (Sw2) lorsque le panneau photovoltaïque (10) ne peut produire de l'énergie électrique.

13. La méthode de l'une quelconque des revendications 7 à 12, dans laquelle l'unité de conditionnement électrique (40) est un convertisseur DC-AC.
